# EUROPEAN PATENT APPLICATION

(11) **EP 4 468 449 A1**
(43) Date of publication of application: **27.11.2024**
(21) Application number: 24177210.2
(22) Date of filing: 22.05.2024
(51) Int. Cl.: H01M 10/48, H01M 50/213, H01M 50/284, H01M 50/289, H01M 50/519

(54) **BATTERY PACK AND TEMPERATURE DETECTION DEVICE THEREOF**

(30) Priority: 22.05.2023 CN 202321239703 U
(71) Applicant: Techtronic Cordless GP, Anderson, SC 29621 (US)
(72) Inventor: WANG, Ren Jie, Dongguan City (CN); LIU, Ya Bin, Dongguan City (CN); WANG, Liang He, Dongguan City (CN); MA, Hai Bo, Kwai Chung (CN)
(74) Representative: Novagraaf Group

(57) **Abstract**

The present utility model provides a battery pack, comprising: a housing; a battery cell assembly; a circuit board; and a battery cell supporting member. The battery pack further comprises a temperature detection device. The temperature detection device comprises: a temperature sensor for detecting the temperature of a battery cell surface; and a thermally conductive element disposed corresponding to the temperature sensor, wherein the thermally conductive element is located between the temperature sensor and the battery cell surface, transfers the temperature of the battery cell surface to the temperature sensor, and fixes the position of the temperature sensor relative to the battery cell surface, and wherein the cell supporting member is provided with a through hole corresponding to the position of the temperature detection device, and the through hole allows the temperature sensor and/or the thermally conductive element to be at least partially located in the through hole. The present utility model further provides a temperature detection device for the battery pack. The battery pack and temperature detection device of the utility model can not only reliably and accurately detect the temperature of the battery cell, but also facilitate installation and save costs and space.

## Description

### Technical Field

The present utility model relates to the field of batteries, and in particular to a battery pack and a temperature detection device thereof.

### Background Art

In the case that there is no fixed power source or it is inconvenient for direct power supply, battery packs are usually used to be attached to electrical equipment for power supply. Examples of electrical equipment may be power tools, household cleaning equipment, kitchen equipment, medical equipment or the like that require frequent movement.

For safety reasons, it is usually necessary to continuously monitor the temperature inside the battery packs (especially battery cell assemblies) during use. Therefore, temperature sensors are installed inside the battery packs. Under normal circumstances, since there is a certain gap between a temperature sensor and a part (such as a battery cell surface) to be detected thereby, and heat is transferred between the detection part and the temperature sensor through the air, there are problems such as a large difference between the detected temperature and the actual temperature, inaccurate detection and delayed response.

In order to solve the above problems, in the prior art, a method of filling a thermally conductive adhesive (such as thermally conductive glue, thermally conductive paste or the like) between the temperature sensor and the detection part is usually used to improve the heat transfer therebetween. However, the thermally conductive adhesive is an amorphous gel-like material with low strength and without fixing function. During the use of the battery, the extrusion of a small force can cause the thermally conductive adhesive to deform or shift, or even completely move out of the position between the temperature sensor and the detection part, resulting in inaccurate detection results and poor reliability. In order to ensure the validity of the detection results, in the prior art, an additional dedicated fixing device is usually provided to limit the relative positions between the thermally conductive adhesive, the temperature sensor and the detection part. However, the provision of such a fixing device will lead to a waste of materials and space, and after long-term use, the fixing device may suffer from aging and other problems, thereby causing the temperature detection system of the battery pack to fail. In addition, the existing thermal conductive adhesive itself has insufficient thermal conductivity, and its thermal conductivity is generally about 2 W/mK, which cannot meet the requirements for accurate detection.

Therefore, there is a need to provide a battery pack and a temperature detection device thereof so as to solve or at least alleviate the above problems.

### Summary of the Utility model

An object of the present utility model is to provide a battery pack and a temperature detection device thereof, which can accurately and reliably detect the temperature of the battery cell assembly during the use of the battery pack. Meanwhile, there is no need to additionally provide dedicated fixing devices, which is advantageous to save materials and costs, and makes the structure of the battery pack more compact. In addition, the arrangement of directly detecting the battery cell temperature makes the temperature detection results of the present utility model more accurate and the process simpler. That is, the battery cell temperature can be obtained directly through measurement without further conversion based on the measurement results.

According to one aspect of the present utility model, a battery pack is provided. The battery pack is configured to enable power to be supplied for a power tool. The battery pack comprises:
a housing;
a battery cell assembly located inside the housing and comprising one or more battery cells;
a circuit board arranged inside the housing and located near the battery cell assembly; and
a battery cell supporting member arranged between the circuit board and the battery cell assembly and used to support the battery cell assembly,
wherein the battery pack further comprises a temperature detection device, and the temperature detection device comprises:
   one or more temperature sensors arranged on a side of the circuit board facing the battery cell assembly, and used to detect the temperature of a battery cell surface of one or more battery cells in the battery cell assembly; and
   one or more thermally conductive elements disposed corresponding to the one or more temperature sensors, wherein the thermally conductive element is located between the temperature sensor and the battery cell surface to be detected, and wherein the thermally conductive element can transfer the temperature of the battery cell surface to be detected to the temperature sensor, and at least partially fixes the position of the temperature sensor relative to the battery cell surface to be detected, and
   wherein the battery cell supporting member is provided with one or more through holes corresponding to the position of the temperature detection device, and the temperature sensor and/or the one or more thermally conductive elements are located at least partially in the corresponding one or more through holes.

In some preferred embodiments, the thermally conductive element is made of elastic material, and can at least partially adapt to the shape of the battery cell surface to be detected and/or the shape of the temperature sensor.

In some preferred embodiments, one side of the thermally conductive element is bonded and fixed to the temperature sensor, and the opposite side thereof is bonded and fixed to the battery cell surface to be detected.

In some preferred embodiments, the thermally conductive element is made of a thermally conductive material with a thermal conductivity between 3 W/mK and 8 W/mK.

In some preferred embodiments, the thermally conductive element is a sheet-shaped thermally conductive pad.

In some preferred embodiments, the one or more temperature sensors are installed on a surface of one side of the circuit board facing the battery cell assembly by means of welding and/or bonding.

In some preferred embodiments, the temperature sensor is a patch sensor.

In some preferred embodiments, the battery cell supporting member is provided with a fastening member, and the circuit board is fastened on the battery cell supporting member by means of the fastening member, so that the temperature sensor abuts against the thermally conductive element.

In some preferred embodiments, the through hole is aligned with a top surface of one battery cell among the battery cells.

In some preferred embodiments, the one battery cell among the battery cells is a battery cell located in the middle.

In some preferred embodiments, the circuit board is disposed near a circumferential side surface of the one or more battery cells, and extends parallel to the circumferential side surface, wherein the temperature sensor arranged on the circuit board is used to detect the temperature of the circumferential side surface, wherein the thermally conductive element is located between the temperature sensor and the circumferential side surface to be detected, and wherein the one or more through holes are provided at a position corresponding to the temperature detection device on a portion of the battery cell supporting member close to the circumferential side surface.

In some preferred embodiments, the circuit board is disposed near an end surface of the one or more battery cells, and extends parallel to the end surface, wherein the temperature sensor arranged on the circuit board is used to detect the temperature of the end surface, wherein the thermally conductive element is located between the temperature sensor and the end surface to be detected, and wherein the one or more through holes are provided at a position corresponding to the temperature detection device on a portion of the battery cell supporting member close to the end surface.

In some preferred embodiments, the battery cell supporting member comprises an upper supporting member and a lower supporting member, wherein the upper supporting member is located between the circuit board and the battery cell assembly, and wherein the one or more through holes are provided at a position corresponding to the temperature detection device on the upper supporting member.

According to another aspect of the present utility model, a temperature detection device is provided. The temperature detection device can be used in the battery pack according to any one of the preceding embodiments. The temperature detection device comprises:
one or more temperature sensors arranged on a side of the circuit board facing the battery cell assembly, and used to detect the temperature of a battery cell surface of one or more battery cells (121) in the battery cell assembly (120); and
one or more thermally conductive elements disposed corresponding to the one or more temperature sensors, wherein the thermally conductive element is located between the temperature sensor and the battery cell surface to be detected, and wherein the thermally conductive element can transfer the temperature of the battery cell surface to be detected to the temperature sensor, and at least partially fixes the position of the temperature sensor relative to the battery cell surface to be detected, and
wherein the battery cell supporting member is provided with one or more through holes corresponding to the position of the temperature detection device, and the temperature sensor and/or the one or more thermally conductive elements are located at least partially in the corresponding one or more through holes.

By utilizing the battery pack and its temperature detection device according to the present utility model, at least the following beneficial effects can be achieved:
(1) By arranging, between the temperature sensor and the battery cell detection surface, the thermally conductive element according to the present utility model that has good thermal conductivity and can play a fixing function, it can effectively avoid or at least alleviate the problem that commonly used thermally conductive adhesives such as thermally conductive adhesives without fixed shape are easily displaced (and even moved out of the detection region) during use, thereby eliminating the need to provide a dedicated fixing device for the temperature detection device, which can improve reliability, facilitate installation, save materials and costs, and can also save space so that the structure of the battery pack is more compact.
(2) Meanwhile, by correspondingly providing through holes for accommodating the temperature sensor and the thermally conductive element on the battery cell supporting member, an independent accommodation space can be provided for the temperature detection device without adding other devices or materials, so that the temperature detection device is not easily affected by other components in the battery pack. Moreover, a certain range of motion limitation can also be provided. That is, only the thermally conductive element and the temperature sensor are allowed to displace within a certain range due to reasons such as transportation, vibration, etc., during battery use, but not beyond the range limited by the through holes.
(3) The arrangement of directly detecting the battery cell temperature makes the temperature detection results of the present utility model more accurate and the process simpler. That is, the battery cell temperature can be obtained directly through measurement without further conversion based on the measurement results.

### Brief Description of the Drawings

In order to better understand the above and other objects, features, advantages and functions of the present utility model, reference may be made to preferred embodiments shown in the drawings. In the drawings, identical reference signs denote identical components. It should be understood by those skilled in the art that the drawings are intended to illustrate preferred embodiments of the present utility model schematically, and have no limiting effect on the scope of the present utility model, and that the various components in the drawings are not drawn to scale.
FIG. 1 is a schematic view of the external structure of a battery pack according to a preferred embodiment of the present utility model;
FIG. 2 is an exploded schematic view of the battery pack shown in FIG. 1, in which some structures inside the battery pack are not shown;
FIG. 3 shows a schematic view of an upper supporting member of a battery cell supporting member of the battery pack according to the present utility model, in which some structures on the upper supporting member are omitted.
FIGS. 4A to 4E illustratively show schematic views of the arrangements of a circuit board and a temperature detection device according to some preferred embodiments of the present utility model, in which a battery pack housing and some structures within the housing are not shown.

Description of reference signs:
- 100: battery pack
- 110: housing
- 111: upper housing
- 112: lower housing
- 120: battery cell assembly
- 121: battery cell
- 130: control assembly
- 131: circuit board
- 140: temperature detection device
- 141: temperature sensor
- 142: thermally conductive element
- 150: battery cell supporting member
- 151: upper supporting member
- 152: lower supporting member
- 153: front supporting member
- 154: rear supporting member
- 1511, 1521, 1531, 1541: through hole
- 1512: fastening member

### Detailed Description of the Embodiments

Specific embodiments of the present utility model are now described in detail with reference to the drawings. The embodiments described herein are merely preferred embodiments of the present utility model. Based on the described preferred embodiments, those skilled in the art will be able to conceive of other ways in which the present utility model could be implemented, all of which likewise fall within the scope of the present utility model.

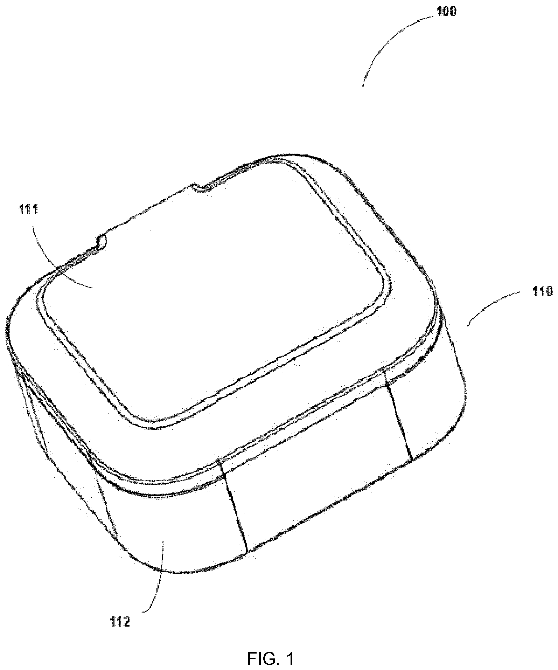

The present utility model provides a battery pack. As shown in FIGS. 1 to 2, according to a preferred embodiment of the present utility model, the battery pack 100 includes a housing 110 and a battery cell assembly 120 composed of one or more battery cells 121 located in the housing 110 for storing electrical energy. The housing 110 includes an upper housing 111 and a lower housing 112. In an assembled state, the upper and lower housings together form an internal accommodation space of the battery pack, and the battery cell assembly 120 is arranged in the internal accommodation space. The housing 110 is further provided with a connection structure (not shown) for connecting with another connection structure of a complementary shape on electrical equipment to achieve physical connection and electrical connection. The electrical equipment may specifically be a power tool, household cleaning equipment, kitchen equipment, medical equipment or the like. When the electricity quantity of the battery pack decreases, the battery pack 100 may also be connected to charging equipment to charge itself.

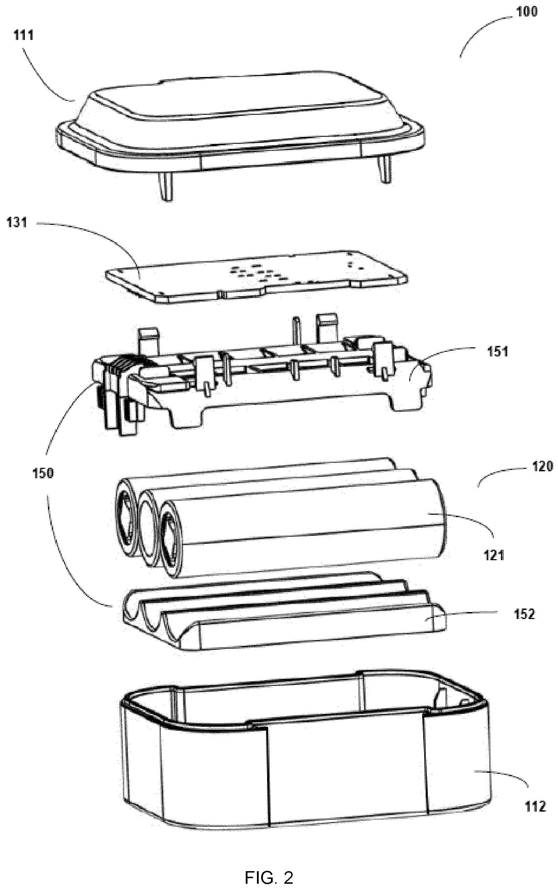

Referring to FIG. 2, the internal structure of the battery pack 100 is shown in an exploded view, in which some parts are omitted in order to simplify and more clearly show main components to be discussed. In this embodiment, the battery cell assembly 120 includes three cylindrical battery cells 121 arranged with their axes parallel to each other. It can be understood that in other embodiments, the battery cell assembly may include other types (e.g., pouch-like battery cells), other quantities or other arrangements of battery cells. The interior of the housing of the battery pack 100 further includes a control assembly 130 disposed above the battery cell assembly 120. The control assembly 130 includes a circuit board 131 and electronic elements (not shown) arranged on the circuit board for performing various control operations on the battery pack. In this embodiment, the circuit board 131 is arranged on the upper side of the battery cell assembly 120, is accommodated in the upper housing 111, and extends substantially parallel to the battery cell assembly. It can be understood that according to needs, those skilled in the art can dispose the circuit board 131 at any suitable location in the battery pack, extending at any suitable angle or direction.

Furthermore, according to a preferred embodiment of the present utility model, a battery cell supporting member 150 for supporting the battery cell assembly 120 and fixing the positions of the plurality of battery cells 121 is also provided inside the housing of the battery pack 100. Preferably, the battery cell supporting member 150 is located between the battery cell assembly 120 and the housing 110, and includes an upper supporting member 151 and a lower supporting member 152 respectively located on the upper and lower sides of the battery cell assembly 120. In an assembled state, the upper supporting member 151 and the lower supporting member 152 are closed together to form a plurality of corresponding substantially cylindrical accommodation spaces therebetween for receiving a plurality of cylindrical battery cells 121. Preferably, in this embodiment, the upper supporting member 151 is disposed between the battery cell assembly 120 and the circuit board 131 to isolate them. More preferably, the upper side surface of the upper supporting member 151 close to the upper housing 111 may also be used as a supporting surface to support the circuit board 131, so that the circuit board 131 can be fixed on the supporting surface.

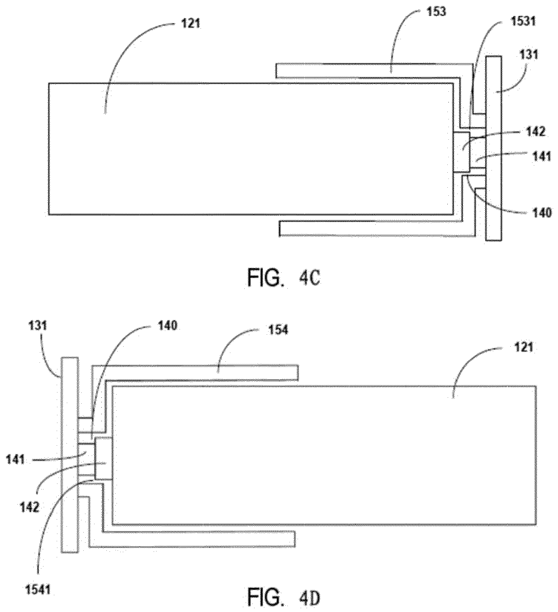

It can be understood that the battery cell supporting member may also have other configurations that those skilled in the art can be conceived of, and is not necessarily configured with the above-mentioned upper supporting member 151 and lower supporting member 152. For example, the battery cell supporting member may be composed of front and rear parts (such as a front supporting member 153 and a rear supporting member 154 respectively shown in FIGS. 4C and 4D), or may be composed of left and right parts, or may be integrally formed, as long as it can support the battery cell assembly. In addition, the battery cell supporting member may cover at least a portion of a circumferential side surface and/or end surface of a battery cell in the battery cell assembly according to needs.

Further, in order to avoid abnormal temperature rise of components (especially the battery cell assembly) in the battery pack during use, for safety reasons, a temperature detection device is provided in the battery pack 100 for directly detecting the temperature of the battery cell assembly 120, and transmitting the detected temperature information to the control assembly 130. When the control assembly 130 determines by comparison that the temperature information exceeds a preset temperature threshold, the operating mode of the battery pack may be adjusted, such as interrupting the charging and/or discharge process of the battery pack, reducing the charging and/or discharging speed, etc., thereby adjusting the temperature inside the battery pack. In addition, the control assembly 130 may also report the over-temperature condition of the battery pack to a user through visual, tactile and other means, such as sounding an alarm, flashing a warning light, providing vibration or the like, according to the determination result. In this way, the temperature inside the battery pack 100, especially the temperature of the battery cell assembly 120, can be continuously detected and controlled, which can thus prevent the battery pack from burning, exploding and other accidents due to the over temperature.

It should be noted that the above-mentioned "directly" detecting the temperature of the battery cell assembly refers to directly detecting the battery cell assembly itself by arranging the temperature detection device near the battery cell assembly, rather than indirectly obtaining the temperature information of the battery cell assembly by arranging the temperature detection device near, for example, the battery pack housing or other components inside the housing, detecting the temperature of the housing or other components, and then performing calculations. The battery cell assembly with the energy storage function is the main portion of generating heat in the battery pack. The above-mentioned arrangement of directly detecting the temperature of the battery cell makes the temperature detection result of the present utility model more accurate and the process simpler, that is, the battery cell temperature can be obtained directly through measurement, without further conversion based on the measurement results.

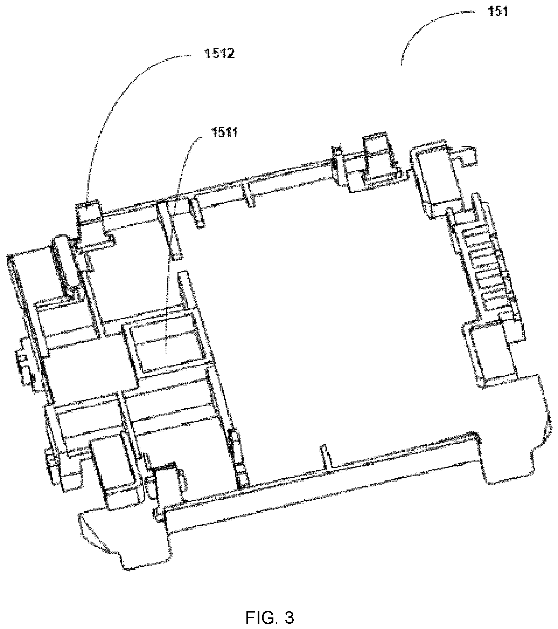

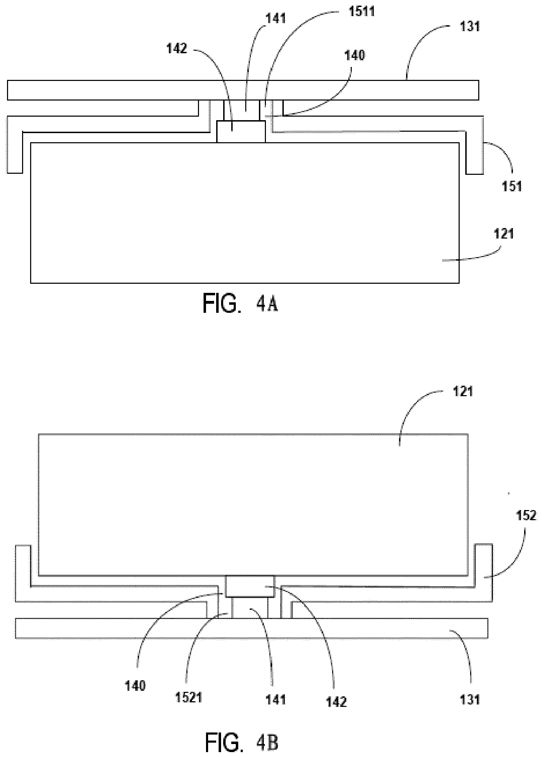

Further preferably, the arrangement of the temperature detection device of the present invention is exemplified with reference to FIGS. 3 and 4A. FIG. 3 shows the upper supporting member 151 according to the preferred embodiment of the present utility model, and FIG. 4A schematically shows an exemplary arrangement of the circuit board 131, the battery cell 121, the upper supporting member 151, and the temperature detection device 140 (in which the battery pack housing and other components in the housing are not shown for the sake of simplicity). Referring to FIG. 4A, the temperature detection device 140 includes one or more temperature sensors 141 and one or more thermally conductive elements 142 arranged corresponding to the one or more temperature sensors 141. The above-mentioned one or more temperature sensors 141 are arranged near one or more battery cells 121 of the battery cell assembly 120, and are used to directly detect the temperature on and/or near the surface of the battery cell 121. The above-mentioned one or more thermally conductive elements 142 are arranged between the corresponding one or more temperature sensors 141 and a battery cell surface whose temperature is to be detected by the temperature sensor, and are used to transfer the temperature of the battery cell surface to be detected to the temperature sensor, and to at least partially fix the position of the temperature sensor relative to the battery cell surface, so as to prevent or at least reduce inaccurate detection results due to the relative displacement of the temperature sensor relative to the battery cell surface (such as movement away from the battery cell surface) during use of the battery pack. The thermally conductive element of the present utility model can not only perform thermal conduction, but also play a certain fixing function. Therefore, there is no need to additionally provide a fixing component to fix the thermally conductive element and/or the temperature sensor. This design that achieves both thermal conduction and fixation functions only through the thermally conductive element itself, is advantageous to save materials and space and improve the reliability of temperature detection.

Continuing to refer to FIGS. 3 and 4A, in this embodiment, the temperature sensor 141 is directly fixed on the circuit board 131, and located on the surface of the side of the circuit board facing the battery cell assembly 120 (a lower side in the embodiment shown in FIG. 3). Preferably, the temperature sensor 141 is a patch temperature sensor, which can be fixedly installed on the circuit board by means of welding, bonding or the like. Further, a through hole 1511 is provided at a position corresponding to the temperature sensor 141 in the upper supporting member 151 of the battery cell supporting member 150, and the temperature sensor 141 is at least partially accommodated in the through hole 1511. Further preferably, the thermally conductive element 142 between the temperature sensor 141 and the battery cell 121 is also at least partially arranged in the through hole 1511. One side of the thermally conductive element is fixed to the temperature sensor, and the opposite side thereof is fixed to the battery cell. More preferably, one side of the through hole 1511 (the side close to the circuit board, that is, the upper side) abuts against the circuit board 131, and the opposite side (the side closer to the battery cell assembly, that is, the lower side) thereof abuts against the corresponding battery cell 121, so that the above-mentioned temperature sensor 141 and thermally conductive element 142 are completely accommodated in the through hole 1511.

Further preferably, the through hole 1511 is aligned with one battery cell 121 in the battery cell assembly 120, and more preferably, the one battery cell is a battery cell located in the middle of the battery cell assembly.

Further preferably, the battery cell supporting member 150 is provided with a fastening member, such as a fastening member 1512 located on the upper supporting member 151 shown in FIG. 3. The circuit board 131 is fastened on the battery cell supporting member 150 by means of the fastening member 1512 (in the illustrated embodiment, it is fastened on the upper supporting member 151), so that the temperature sensor 141 presses against the thermally conductive element 142. The arrangement of the fastening member allows the circuit board to be fixed on the battery cell supporting member in the assembled state without additionally adding a structure dedicated to fixing the temperature detection device 140 near the temperature sensor and the thermally conductive element, so that the temperature detection device can be better kept in a proper position by means of extrusion assembly and is not easily displaced. It can be understood that the positions and number of the fastening members can all be selected by those skilled in the art according to actual needs.

In the above-mentioned configuration of the present utility model, by providing the through holes for accommodating the temperature sensor and the thermally conductive element on the battery cell supporting member 150, the independent accommodation space can be provided for the temperature detection device 140 without adding other fixing devices or materials, so that the temperature detection process is unaffected or less affected by other components in the battery pack, and a certain range of motion limitation can also be provided, that is, only the thermally conductive element and the temperature sensor are allowed to displace within a certain range (for example, within 20% of the diameter of the battery cell, more preferably within 20%, and more preferably within 5%) due to reasons such as transportation, vibration, etc. during battery use, but not beyond the range limited by the through holes.

Further preferably, the circumferential size of the through hole 1511 on the above-mentioned battery cell supporting member 150 is slightly larger than the circumferential size of the above-mentioned temperature sensor 141 and/or thermally conductive element 142. Preferably, the size difference (i.e., gap size) between the through hole and the temperature sensor and/or the thermally conductive element at the corresponding position in the circumferential direction is within 20% of the size of the through hole, more preferably within 10%, and more preferably within 5%. Such a gap size can not only facilitate assembly, that is, allowing the elastic thermally conductive element to slightly expand circumferentially when pressed without contacting the circumferential wall of the through hole 1511 and thereby hindering assembly, but also ensure that the gap is not too large to limit the temperature detection device 140.

It can be understood that those skilled in the art can adjust the positions of the circuit board 131 and the corresponding temperature detection device 140 according to needs, and it is not limited to the configuration in which they are arranged above the upper supporting member 151 as described above.

For example, in a preferred embodiment, the circuit board 131 is located near a circumferential side surface of one or more battery cells 121 and extends parallel to the circumferential side surface; the temperature sensor 141 arranged on the circuit board is used to detect the temperature of the circumferential side surface; the thermally conductive element 142 is located between the temperature sensor 141 and the circumferential side surface to be detected; and a portion of the battery cell supporting member 150 close to the circumferential side surface is provided with through holes corresponding to the positions of the temperature sensor and the thermally conductive element.

In yet another preferred embodiment, the circuit board 131 is located near an end surface of one or more cells 121 and extends parallel to the end surface; the temperature sensor 141 arranged on the circuit board is used to detect the temperature of the end surface; the thermally conductive element 142 is located between the temperature sensor 141 and the end surface to be detected; and a portion of the battery cell supporting member 150 close to the end surface is provided with through holes corresponding to the positions of the temperature sensor and the thermally conductive element.

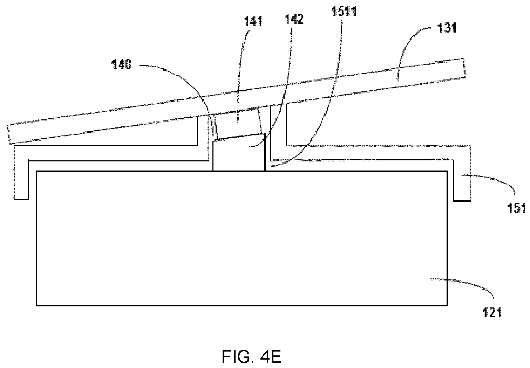

Preferably, FIGS. 4B to 4E show some exemplary arrangements of the circuit board and the temperature detection device, in which the battery pack housing and other components within the housing are not shown for the sake of simplicity. As shown in FIG. 4B, the circuit board 131 may also be arranged below the lower supporting member 152. In this case, the lower supporting member 152 is provided with corresponding through holes 1521 for at least partially accommodating the temperature sensor 141 and the thermally conductive element 142. Alternatively, as shown in FIGS. 4C-4D, the battery cell supporting member may include a front supporting member 153 and a rear supporting member 154. Correspondingly, when the circuit board 131 and the temperature detection device 140 are arranged at the front end of the battery cell assembly, the front supporting member 153 is correspondingly provided with a through hole 1531. When the circuit board 131 and the temperature detection device 140 are arranged at the rear end of the battery cell assembly, the rear supporting member 154 is correspondingly provided with a through hole 1541. In addition, when the circuit board 131 in the battery pack is arranged obliquely relative to the battery cell assembly 120 for the sake of heat dissipation or other factors (such as the configuration shown in FIG. 4E), the thermally conductive element 142 may be adaptively configured so that opposite side surfaces extend non-parallel to each other, so as to respectively adapt to the extension direction of the battery cell and the inclined extension direction of the circuit board. Those skilled in the art can make adjustments according to actual needs, and it is not limited to the exemplary arrangements listed above.

Further preferably, the above-mentioned thermally conductive element 142 is a sheet-shaped thermally conductive pad. The sheet-shaped configuration can increase the contact area between the thermally conductive pad and the corresponding temperature sensor (especially the patch temperature sensor) and the battery cell surface to be detected, improving the accuracy of detection results. Meanwhile, due to its thin thickness, for example, between 0.3 mm and 20 mm, the sheet-shaped thermally conductive pad can also make the internal structure of the battery pack more compact, saving space. It can be understood that those skilled in the art can select thermally conductive elements of various shapes and sizes according to actual needs.

Further preferably, the above-mentioned thermally conductive element 142 is made of elastic material. During use, the thermally conductive element can at least partially adapt to the shape of the battery cell surface to be detected and/or the shape of the corresponding temperature sensor, thereby achieving close fit, and making the temperature detection results more accurate. For example, in a preferred embodiment, during installation, the side of the sheet-shaped thermally conductive pad that is in contact with the battery cell surface can be elastically adapted to the shape of the battery cell surface, and the opposite side thereof that is in contact with the temperature sensor can be elastically adapted to the shape of the corresponding contact surface of the temperature sensor. Preferably, during use of the battery pack, when, for example, the circuit board or cell assembly is subjected to an extrusion force, the temperature sensor 141 may be pressed into the thermally conductive element. Therefore, the elastic thermally conductive element also provides a buffering function, so that the temperature sensor is protected from forces or subjected to lighter forces, which can protect the temperature sensor.

Further preferably, the above-mentioned thermally conductive element 142 is made of viscous material. For example, in a preferred embodiment, during installation, one side of the sheet-shaped thermally conductive pad is fixed to the battery cell surface in a bonding manner, and the opposite side thereof is fixed to the corresponding contact surface of the temperature sensor a bonding manner. In this way, the thermally conductive element 142 of the present utility model can fix the position of the temperature sensor 141 relative to the battery cell surface to be detected, so that during use of the battery pack, the positions of the temperature sensor 141 and the thermally conductive element 142 are fixed relative to the position of the battery cell surface to be detected. Therefore, the thermally conductive element 142 can not only play a heat transfer function, but also play a fixing function, thereby at least partially avoiding inaccurate detection results due to the displacement of the temperature sensor or the thermally conductive element (especially moving out of the detection surface region of the battery cell) during use, and further temperature management failure of the battery pack. In this way, since the thermally conductive element 142 itself has viscosity, there is no need to additionally apply a viscous coating (such as thermally conductive glue, etc.) on the surface of the thermally conductive element, nor is there any need to additionally provide dedicated fixing devices for fixing the thermally conductive element and the temperature sensor.

In addition, during assembly, since the thermally conductive element 142 has viscosity, it can be first fixed on the battery cell surface of the battery cell assembly 120 corresponding to the through hole 1511 of the battery cell supporting member 150. After that, the battery cell supporting member is installed, so that the thermally conductive element is at least partially located in the through hole 1511. Then, the circuit board 131 with the temperature sensor 141 fixed at its corresponding position in advance is installed, so that the temperature sensor is at least partially located in the through hole and pressed into the elastic thermally conductive element with an appropriate extrusion force. This combination of extrusion fixation and bonding fixation enables the temperature detection device to be arranged more firmly.

Further preferably, the above-mentioned thermally conductive element 142 is an thermally conductive element made of a thermally conductive material with a thermal conductivity between 3 W/mK and 8 W/mK. For example, the thermal conductivity may be about 3 W/mK, 5 W/mK, or 8 W/mK. It should be noted that, the above-mentioned word "about" means that the thermal conductivity differs from the above-mentioned value by no more than 20%, preferably, no more than 10%, and more preferably no more than 6%, that is, 0.3 W/mK.

It can be understood that the size and shape of the thermally conductive element 142 of the present utility model can be customized according to actual needs, for example, according to the size of the region to be detected, the size of the temperature sensor, the arrangements of the circuit board and the battery cell, and other factors. Preferably, the thermally conductive element 142 may have a size larger than that of the corresponding temperature sensor 141 to cover the entire sensing surface of the temperature sensor, thereby achieving more sufficient heat transfer. Correspondingly, preferably, the size of the through hole 1511 on the battery cell supporting member 150 may also be customized according to the size of the temperature sensor and the thermally conductive element. Therefore, this thermally conductive element/thermal conductive pad of the present utility model provides a higher degree of design freedom and is suitable for mass production.

The above-mentioned temperature sensor may be any type of temperature sensor that those skilled in the art can conceive of, preferably an NTC sensor and/or a PTC sensor.

The above description of various embodiments of the present utility model is provided for purposes of description to one of ordinary skill in the relevant art. The present utility model is not intended to be exclusive or limited to individual disclosed embodiments. As above, those of ordinary skill in the art will understand various alternatives and variations of the present utility model. Thus, although some alternative embodiments have been specifically described, those of ordinary skill in the art will understand, or develop with relative ease, other embodiments. The present utility model is intended to include all alternatives, modifications, and variations of the present utility model described herein, as well as other embodiments that fall within the spirit and scope of the present utility model described above.

## Claims

1. A battery pack (100), configured to enable power to be supplied for a power tool, the battery pack (100) comprising:
a housing (110);
a battery cell assembly (120) arranged inside the housing and comprising one or more battery cells (121);
a circuit board (131) arranged inside the housing and located near the battery cell assembly (120); and
a battery cell supporting member (150) arranged between the circuit board (131) and the battery cell assembly (120) and used to support the battery cell assembly (120),
wherein the battery pack (100) further comprises a temperature detection device (140), and the temperature detection device comprises:
one or more temperature sensors (141) arranged on a side of the circuit board (131) facing the battery cell assembly (120), and used to detect the temperature of a battery cell surface of one or more battery cells (121) in the battery cell assembly (120); and
one or more thermally conductive elements (142) disposed corresponding to the one or more temperature sensors (141), wherein the thermally conductive element (142) is located between the temperature sensor (141) and the battery cell surface to be detected, and wherein the thermally conductive element (142) can transfer the temperature of the battery cell surface to be detected to the temperature sensor, and at least partially fixes the position of the temperature sensor (141) relative to the battery cell surface to be detected, and
wherein the battery cell supporting member (150) is provided with one or more through holes (1511, 1521, 1531, 1541) corresponding to the position of the temperature detection device (140), and the temperature sensor (141) and/or the one or more thermally conductive elements (142) are located at least partially in the corresponding one or more through holes.

2. The battery pack (100) according to claim 1, wherein the thermally conductive element (142) is a thermally conductive element which is made of elastic material and can at least partially adapt to the shape of the battery cell surface to be detected and/or the shape of the temperature sensor.

3. The battery pack (100) according to claim 1, wherein one side of the thermally conductive element is bonded and fixed to the temperature sensor (141), and the opposite side thereof is bonded and fixed to the battery cell surface to be detected.

4. The battery pack (100) according to claim 1, wherein the thermally conductive element (142) is a thermally conductive element made of a thermally conductive material with a thermal conductivity between 3 W/mK and 8 W/mK.

5. The battery pack (100) according to any one of claims 1-4, wherein the thermally conductive element (142) is a sheet-shaped thermally conductive pad.

6. The battery pack (100) according to claim 1, wherein the one or more temperature sensors (141) are installed on a surface of one side of the circuit board (131) facing the battery cell assembly (120) by means of welding and/or bonding.

7. The battery pack (100) according to claim 6, wherein the temperature sensor is a patch sensor.

8. The battery pack (100) according to claim 7, wherein the battery cell supporting member (150) is provided with a fastening member, and the circuit board is fastened on the battery cell supporting member (150) by means of the fastening member, so that the temperature sensor abuts against the thermally conductive element (142).

9. The battery pack (100) according to claim 7, wherein the through hole is aligned with a top surface of one battery cell among the battery cells.

10. The battery pack (100) according to claim 9, wherein the one battery cell among the battery cells is a battery cell located in the middle.

11. The battery pack (100) according to claim 1, wherein the circuit board (131) is disposed near a circumferential side surface of the one or more battery cells (121), and extends parallel to the circumferential side surface, wherein the temperature sensor (141) arranged on the circuit board is used to detect the temperature of the circumferential side surface, wherein the thermally conductive element (142) is located between the temperature sensor (141) and the circumferential side surface to be detected, and wherein the one or more through holes are provided at a position corresponding to the temperature detection device (140) on a portion of the battery cell supporting member (150) close to the circumferential side surface.

12. The battery pack (100) according to claim 1, wherein the circuit board (131) is disposed near an end surface of the one or more battery cells (121), and extends parallel to the end surface, wherein the temperature sensor (141) arranged on the circuit board is used to detect the temperature of the end surface, wherein the thermally conductive element (142) is located between the temperature sensor (141) and the end surface to be detected, and wherein the one or more through holes are provided at a position corresponding to the temperature detection device (140) on a portion of the battery cell supporting member (150) close to the end surface.

13. The battery pack according to claim 1, wherein the battery cell supporting member (150) comprises an upper supporting member (151) and a lower supporting member (152), wherein the upper supporting member (151) is located between the circuit board (131) and the battery cell assembly (120), and wherein the one or more through holes (1511) are provided at a position corresponding to the temperature detection device (140) on the upper supporting member (151).

14. A temperature detection device (140), which can be used in the battery pack (100) according to any one of claims 1-13, wherein the temperature detection device (140) comprises:
one or more temperature sensors (141), which are arranged on a side of the circuit board (131) facing the battery cell assembly (120), and used to detect the temperature of a battery cell surface of one or more battery cells (121) in the battery cell assembly (120); and
one or more thermally conductive elements (142) disposed corresponding to the one or more temperature sensors (141), wherein the thermally conductive element (142) is located between the temperature sensor (141) and the battery cell surface to be detected, and wherein the thermally conductive element (142) can transfer the temperature of the battery cell surface to be detected to the temperature sensor (141), and at least partially fixes the position of the temperature sensor (141) relative to the battery cell surface to be detected, and
wherein the battery cell supporting member (150) is provided with one or more through holes (1511, 1521, 1531, 1541) corresponding to the position of the temperature detection device (140), and the temperature sensor (141) and/or the one or more thermally conductive elements (142) are located at least partially in the corresponding one or more through holes.
